Europäisches Patentamt

European Patent Office

Office européen des brevets

(11) Publication number: **0 593 159 A2**

# EUROPEAN PATENT APPLICATION

(21) Application number: 93306987.4

(51) Int. Cl.5: **G06F 15/64**

(22) Date of filing: **03.09.93**

(30) Priority: **09.10.92 JP 298073/92**
**09.10.92 JP 298074/92**

(43) Date of publication of application:
**20.04.94 Bulletin 94/16**

(84) Designated Contracting States:
**DE FR GB NL**

(71) Applicant: **HUDSON SOFT CO., LTD.**
**26 Hiragishi 3 Jyo 7-chome,**
**Toyohira-ku**
**Sapporo-shi, Hokkaido 062(JP)**

(72) Inventor: **Tateyama, Seiji, c/o Hudson Soft Co.**
**Ltd.**
**1-18, Hiragishi 3 Jyo 5-chome,**
**Toyohira-ku**
**Sapporo-shi, Hokkaido(JP)**

(74) Representative: **Brunner, Michael John et al**
**GILL JENNINGS & EVERY**
**Broadgate House**
**7 Eldon Street**
**London EC2M 7LH (GB)**

(54) **Image processing apparatus.**

(57) Image data composed of plural blocks are compressed in accordance with the coefficient of a Q-table. The coefficient may be changed for each block using a Q-factor so that display quality of the image may be changed block-by-block easily.

**F I G. 5**

The present invention relates to an image processing apparatus, and more particularly to a computer graphic apparatus in which image data are compressed for effective transmission.

In an image processing apparatus, an image such as a natural picture taken by a video camera, an image scanner or the like, is digitalized to be processed by a computer. Such a process is called "Digitizing" or "Quantizing".

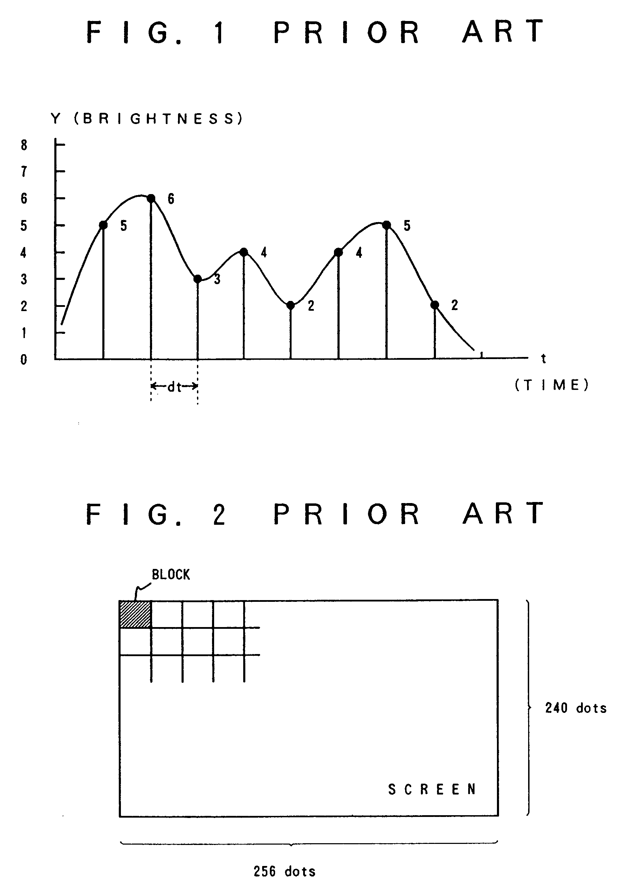

In order to realize the quantizing process, analog image data are sampled at predetermined intervals. For example, analog image data are sampled for each time "dt", where the image data are indicated by a function "f(t)", as shown in Fig. 1. The quantizing process is performed using the sampled data, that is, the sampled data are integrated for each time d(t), f(t) / t. In this process, integrated values are approximated to be even numbers by rounding or the like.

The analog data must be sampled and quantized at as short intervals as possible in order to realize a high quality display. However, the memory capacity and processing time of computers are limited, and as a result, the sampling interval is limited as well.

After that, when the quantized data (digital data) are reproduced, the data are transformed into analog data, that is, inverse quantizing processing is performed.

Under a condition that the function f(t) varies on a cycle "T", cycle "T" may be indicated by "N" when the analog image data are sampled at N points in the period of "0" to "N-1" in the function f(t).

The function f(t) may be transformed by Fourier transform, where "j" and "$\Sigma$" represent the square root of "-1" and the sum total of "k = 0 to N-1," respectively.

$$f(n) = \Sigma\, F\,(k/N)\, \exp\,(j\, 2\pi n\, k/N)$$
$$F(k/N) = (1/N)\, \Sigma\, f\,(n)\, \exp\,(-j\, 2\pi n\, k/N)$$

The above formulas show that the "n" numbers of "f" are given as the sum of amplitudes of waves having a variety of frequencies. In these formulas, "exp" may be indicated as follows by Euler method, and therefore, "f(n)" and "F(k/N)" may be indicated using "cos" and "sin".

$$\exp\,(jx) = \cos(x) + j\, \sin(x)$$
$$\exp\,(-jx) = \cos(x) - j\, \sin(x)$$

It is a DCT (Discrete Cosine Transform) to indicate "F(k/N)" by a cosine function, and the inverse is an IDCT (Inverse DCT). That is, "F(k/N)" and the original image signal "f(n)" may be given by transforming "f(n)" according to DCT and IDCT, respectively.

$$f(n) = \Sigma\, F\,(k/N)\, \cos\,(2\pi n\, k/N)$$
$$F(k/N) = (1/N)\, \Sigma\, f\,(n)\, \cos\,(-j\, 2\pi n\, k/N)$$

DCT and IDCT are especially effective for encoding operations of image data.

In computer image processing, "f" and "F" must be indicated in a secondary dimension as follows:

$$F(u,v) = \{2C(u)C(v)/N\}\, \Sigma\Sigma f(x,y)\cos\{\pi u(2x+1)/2N\}\, \cos\{\pi v(2y+1)/2N\}$$
$$F(x,y) = \Sigma\, \Sigma\, C(u)C(v)F(u,v)\cos\{\pi u(2x+1)/2N\}\, \cos\{\pi v(2y+1)/2N\}$$
$$C(N) = 1\,/\, sqrt(N)\ \text{for}\ N = 0$$
$$C(N) = 1\ \text{for}\ N \neq 0$$

"sqrt(N)" : square root of "N" u, V, X and Y = 0 to N-1

"g(x, y)" represents concentration information of the image, and is developed by using a DCT coefficient F(u, v) when it is transformed by DCT. The DCT coefficient F(u, v) is the function of a space frequency "u, v".

$$A\,(i, j) = (1\,/\, s)\, C\,(i)\, \cos\,\{\pi i\,(2j+1)\,/N\}$$
$$C\,(i) = 1\,/\, s\ \text{for}\ N = 0$$
$$C\,(i) = 1\ \text{for}\ N \neq 0$$

"s" : square root of "N"

In this case, "F" and "f" components are given by the following matrix arithmetic operations.

$$[F\,(u, v)] = [A\,(u, x)]\,[f(x, y)]\,[A^t\,(y, v)]$$

$$[F (x, y)] = [A^t (x, u)] [F(u, v)] [A (v, y)]$$

$[A^t]$ : replace matrix of $[A]$ u, v, x and y = 0 to N-1

"F" for DCT, and "A" and "C" for IDCT are, hereinafter, called a DC coefficient and an AC coefficient, respectively.

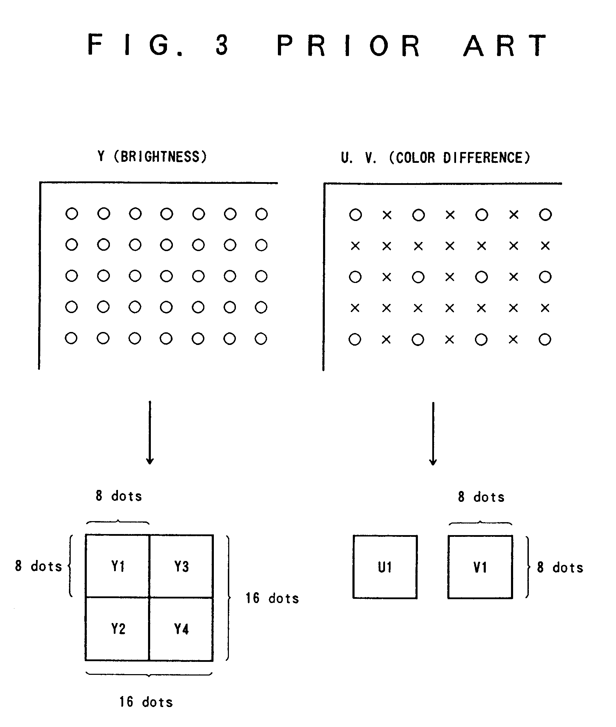

A period for the matrix arithmetic operation is increased in proportion to the square of dimension "N". In game computers, the arithmetic operations are carried out for each block divided from one image. In general, a game computer uses a screen of $256 \times 240$ dots, which is divided into blocks of $16 \times 16$ dots, as shown in Fig. 2.

In such a game computer, RGB and YCrCb systems are used to display colors. According to the YCrCb system, each color may be treated independently, and the system is used in game computers. In the YCrCb system, each color is defined by a brightness (Y) and a color difference (U and V).

According to the YCrCb system, each component needs 8 bits to display a natural picture having 16,700,000 colors. Therefore, in the screen of $256 \times 240$ dots, 180k bytes ($256 \times 240 \times 3$) capacity is required to display the natural picture.

Generally, in natural pictures, successive dots are not very different in color from each other, and therefore the next dots may be distinguished in color by adjusting the brightness thereof only. In such natural pictures, the brightness is sampled for each dot, and the color difference is sampled at one dot interval, as shown in Fig. 3. When color data (Y1, U1, V1) and (Y2, U2, V2) are arranged at next each other, "U2" and "V2" are not sampled, whereby (Y1, U1, V1) and (Y2, U1, V1) only are reproduced.

In the case as in Fig. 3, each block is defined by $8 \times 8$ dots, so that "N" becomes 8, and therefore, DCT and IDCT formulas are given as follows:

$$F(u,v) = (C(u)C(v)/4) \, \Sigma\Sigma f(x,y)\cos\{\pi u(2x+1)/16\} \cos\{\pi v(2y+1)/16\}$$
$$F(x,y) = \Sigma \, \Sigma \, (C(u)C(v)/4 F(u,v)\cos\{\pi u(2x+1)/16\} \cos\{\pi v(2y+1)/16\}$$

u, v, x and y = 0 to 7

In these formulas, the AC coefficient is not different from that in the formulas described before; however, a range of (u, v, x and y) is 0 to 7, and as a result, the arithmetic time is shortened remarkably.

Image data which have been transformed by DCT are quantized in linear fashion by a Mid-treat type quantizing device (odd level quantizing device). "Y" and "C (U, V)" components are quantized independently, and 64 ($8 \times 8$) DCT coefficients are also quantized (divided) by their own quantization steps, respectively. Each quantized coefficient is defined by 9 bits.

In order to decode the image data, the DCT coefficients are reproduced by multiplying by the quantization steps. The quantizing process has an important effect on both of the quality and compression rate of the decoded image, and the DCT coefficients are most important parameters for the encoding. These parameters are stored in quantizing matrix tables, which are called "Q-tables". The contents of the Q-tables are different from each other depending on the display quality to be selected for the image.

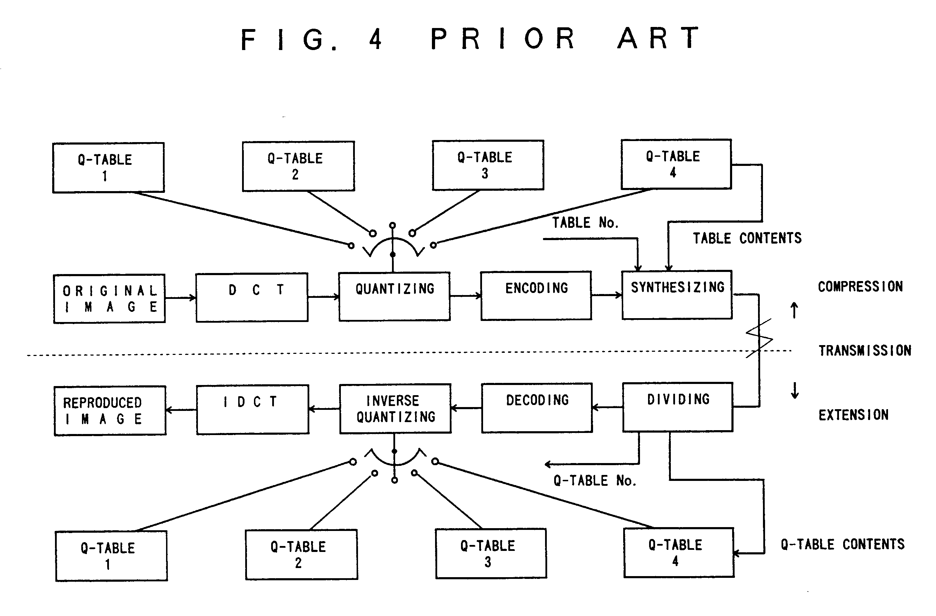

Fig. 4 shows a conventional system for encoding and decoding image data. The system includes a plurality of Q-tables, and the data stored in the Q-tables are supplied to a decoder when a quantizing level is changed. Each Q-table has its own number to be used for being selected by the decoder. The contents of the selected Q-tables are transmitted with the table numbers to the decoder.

According to the conventional system, however, there are disadvantages in that the system needs many Q-tables to realize a variety of display quality of image, and therefore, a large area in a memory is occupied for the Q-tables. Further, the system needs a buffer having a large capacity for buffering the Q-tables. The compression rate of the image data is remarkably changed in accordance with the sizes of the Q-tables.

In Fig. 4, "encoding" represents a process for compressing an image data, that is, binary data of the image are transformed to the number of "1" and "0".

For example, the following binary data,

"0000000000111111111110000011111111100000000011100"

are transformed to the following number data,

"10 11 5 8 8 3 2"

The number data are again transformed in the computer as follows.

"1010 1011 101 1000 1000 11 10"

In these data, a predetermined mark is inserted in the spaces as follows:

"1010*1011*101*1000*1000*11*10"

In general, a Huffman code is used as the insert mark, and the codes are determined in the order of the highest frequency, that is, a numeral that is the most frequently used has the shortest code. As a result, the compression rate of the image is increased when the same binary numerals are arranged many times continuously.

In the conventional system, the encoding and decoding operations are not required when all the image blocks have the same color. When a moving picture is treated, data at a region where plural frames have the same information thereat is encoded in order to used the code data in common. However, all regions in the same picture are not encoded. The conventional system is not suitable for treating still pictures.

It is an object of the present invention to provide a high performance image processing apparatus in which the quality of an image to be displayed may be changed using a single Q-table.

It is another object of the invention to provide a high performance image processing apparatus in which image data, especially image data having square blocks of the same color, may be compressed at a high rate.

According to a first feature of the invention, in an image processing apparatus, image data are compressed in accordance with a coefficient of a quantizing matrix table. The coefficient is changed in accordance with a predetermined factor.

According to a second feature of the invention, in an image processing apparatus, the image data are encoded using a null block code and null block length data when the image data include plural blocks having the same color, the blocks being arranged in succession continuously. The null block code and null block length represent the color and the number of the continuously arranged blocks, respectively.

Specifically, when an image data transmission is initialized, or when the content of the current Q-table is changed, the following Q-table is transmitted to an arithmetic circuit. The Q-factor is transmitted with the image blocks to the arithmetic circuit so that the display quality of the image may be changed for each block.

On the other hand, in a decoding process, when the following Q-table is transmitted to the arithmetic circuit, the Q-table is changed to the current Q-table. When the Q-factor is transmitted to the arithmetic circuit, the content of the current Q-table is changed in accordance with the Q-factor.

In the accompanying drawings:-

Fig. 1 is a graph used for explaining quantizing and sampling operations of image data.

Fig. 2 is a diagram showing the structure of a screen.

Fig. 3 is a diagram showing the sampling operation.

Fig. 4 is a block diagram showing the operation of a conventional image processing apparatus.

Fig. 5 is a block diagram showing the operation of an image processing apparatus according to the invention.

Fig. 6 is a diagram showing the operation for sampling image data in accordance with the invention.

Fig. 7 is a diagram showing the operation for defining colors of the image data in accordance with the invention.

Fig. 8 is a diagram showing an example of an image to be displayed in accordance with the invention.

Fig. 9 is a block diagram showing a computer system of a preferred embodiment according to the invention.

Fig. 10 is a block diagram showing a control unit shown in Fig. 9.

Fig. 11 is a block diagram showing an image data extension unit shown in Fig. 9.

Fig. 12 is a diagram showing the operation for defining colors of the image according to the preferred embodiment.

Fig. 13 is a diagram showing the format of the image data compressed in accordance with the preferred embodiment.

Fig. 14 is a diagram showing the format of data including IDCT data according to the preferred embodiment.

Fig. 15 is a diagram showing the configuration of the IDCT data according to the preferred embodiment.

Fig. 16 is a diagram showing the configuration of a part of the IDCT data according to the preferred embodiment.

Fig. 17 is a diagram showing color data for one image block in accordance with the preferred embodiment.

Fig. 18 is a diagram showing examples of a Q-table according to the preferred embodiment.

Fig. 19 is the format of image data compressed by using a null block according to the preferred embodiment.

Fig. 20 is the format of image data according to the conventional system.

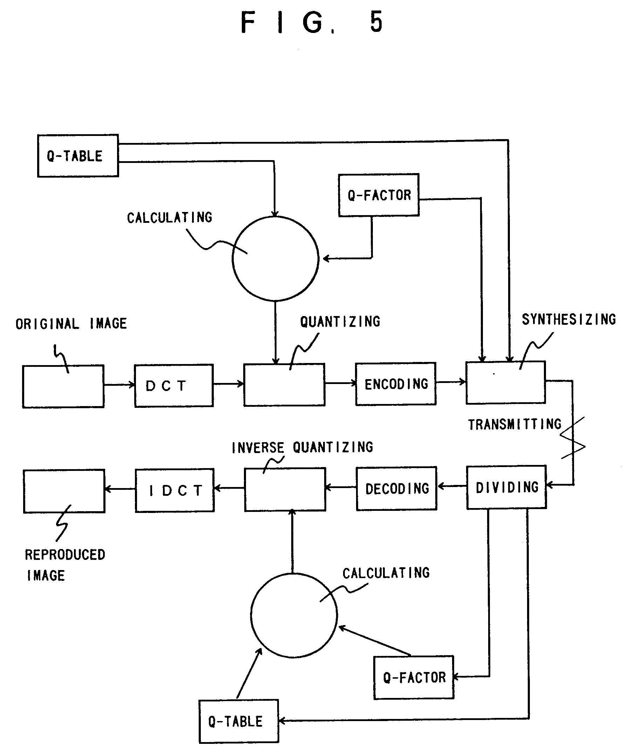

Before describing a preferred embodiment of the invention, the fundamental theory of the invention is first explained in conjunction with Figs. 5 to 8.

**EP 0 593 159 A2**

Fig. 5 shows the process of transmission of image data in accordance with the invention. In the invention, only one Q-table is used for each transmission. Quantizing and inverse quantizing operations are carried out in accordance with a Q-factor and the Q-table. The Q-factor is established for each image block whereby the display quality of the image may be changed block-by-block. When the current Q-table is not suitable for the image, the Q-table is renewed by another Q-table. In this embodiment, a YCrCb system is used to display colors of the image. According to the YCrCb system, each color is defined by a brightness (Y) and a color difference (U and V).

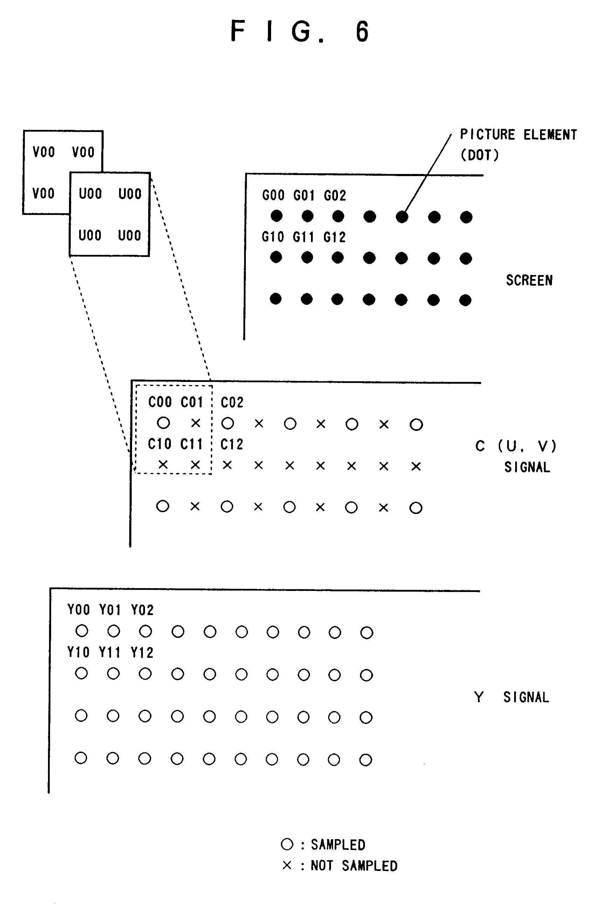

In natural pictures, successive dots are not very different in color from each other, so that the next dots may be distinguished by adjusting the brightness thereof. For that reason, the brightness is sampled for each dot, and the color difference is sampled at one dot interval, as shown in Fig. 6.

When the color components Y and C (U, V) are indicated by $Y_{ij}$ and $C_{ij}$ ($U_{ij}$, $V_{ij}$), picture elements $G_{ij}$ are indicated by "$Y_{ij} + U_{ij} + V_{ij}$", in which " + " represents synthesizing.

The $C_{mn}$ components meet the following condition, because the $C_{mn}$ components, "m" or "n" being an odd number, are not sampled.

$$C_{mn} = C_{mn-1} \ (m : 0 \text{ or even number, } n : \text{odd number})$$

$$= C_{m-1n} \ (m : \text{odd number, } n : 0 \text{ or even number})$$

$$= C_{m-1n-1} \ ( \text{both "m" and "n" : odd numbers})$$

In this case, each of C10, C01 and C11 is equivalent to C00.

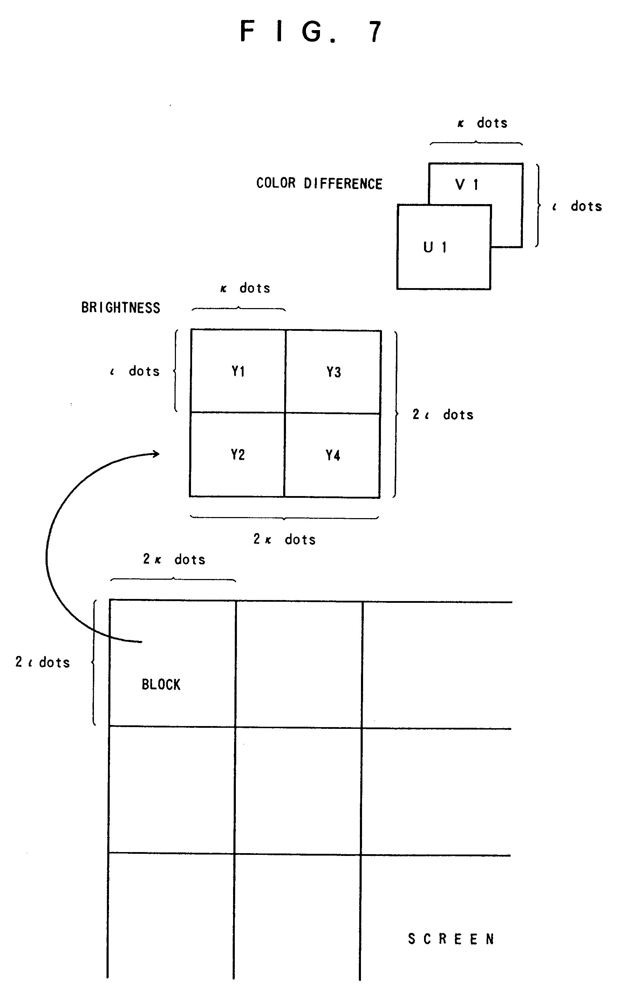

When a screen is divided by image blocks each defined by rectangular regions of $2k \times 2l$ dots, as shown in Fig. 7, the Y data need $2k \times 2l$ dots and each of U and V data need $k \times l$ dots.

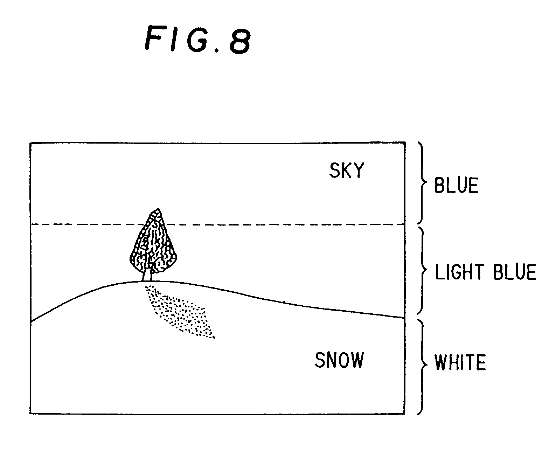

In order to display a natural picture clearly, 16M colors must be used in the system. In a natural picture, shown in Fig. 8, the sky varies in the color blue to light blue by the effect of white ground covered with snow. In such a picture, the same color is continued substantially throughout, that is, the same blocks are arranged in succession continuously. These blocks are called "null blocks". In this example, the image data are indicated by "null block code" + "null block length", where " + " does not represent summing. The null block length represents the number of the null blocks, and is also called a run-length. Such blocks indicated by the null block system are directly decoded without calculation using a Q-table. A number "Z" of dots to be decoded is given by the following formula.

$$Z = (\text{the number of dots in the block}) \times (\text{the number of null blocks})$$

$$= 2k \times 2l \times (\text{the number of null blocks})$$

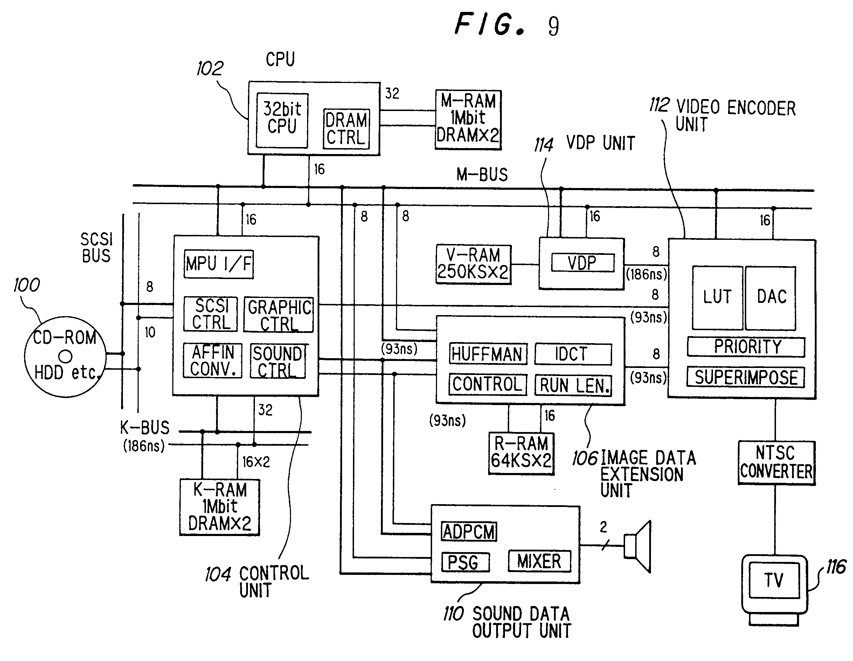

Next, a preferred embodiment according to the present invention will be explained in conjunction with Figs. 9 to 20.

Fig. 9 shows an image processing apparatus of the preferred embodiment. The apparatus includes a game-software recording medium 100 such as a CD-ROM, a CPU 102 of the 32-bit type, a control unit 104 for mainly controlling transmission of image and sound data and interfacing most devices to each other, an image data extension unit 106, an image data output unit, a sound data output unit 110, a video encoder unit 112, a VDP unit 114 and a TV display 116. CPU 102, control unit 104, image data extension unit 106 and VDP unit 114 are provided with their own memories K-RAM, M-RAM, R-RAM and V-RAM, respectively.

CPU 102 directly controls a DRAM via a memory support, and performs communication through an I/O port to peripheral devices, that is called an I/O control function. CPU 102 includes a timer, a parallel I/O port and an interruption control system. VDP unit 114 reads display data which have been written in the VRAM by CPU 102. The display data are transmitted to video encoder unit 112 whereby the data are displayed on the TV display 116. VDP unit 114 has at most two screens each composed of background and sprite images, which are of an external block sequence type of $8 \times 8$ blocks.

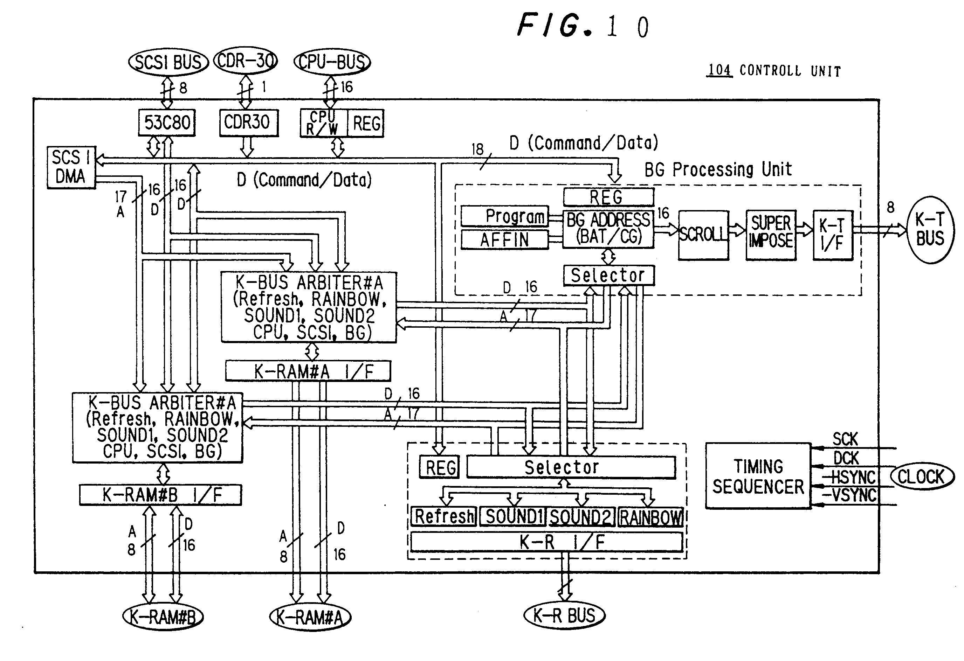

Fig. 10 shows control unit 104. Control unit 104 includes an SCSI controller to which image and sound data are supplied through an SCSI interface from CD-ROM 100. Data supplied to the SCSI controller are buffered in the K-RAM. Control unit 104 also includes a DRAM controller for reading data which have been buffered in the K-RAM at a predetermined timing. In control unit 104, priority judgement is carried out for each dot of natural background image data, and an output signal is transmitted to video encoder unit 112.

Control unit 104 transmits moving image data (full color, pallet), which have been compressed, to image data extension unit 106 whereby the compressed data are extended.

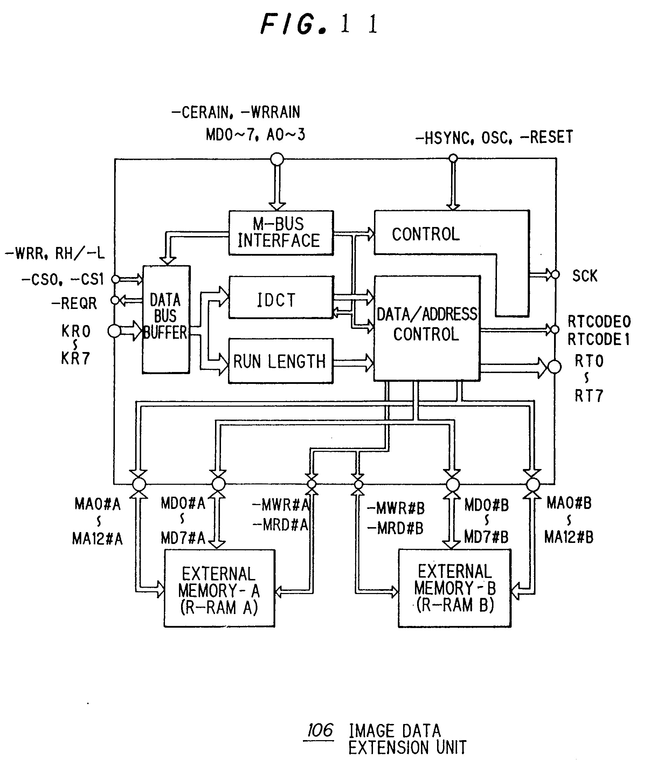

Fig. 11 shows image data extension unit 106. The image data extension unit includes an inverse DCT converter, an inverse quantizing means, a Huffman coding and decoding means and a run-length coding and decoding means. That is, the image data extension unit 106 performs a DCT transformation for a natural moving picture, and treats compressed data encoded by the Huffman coding method and run-length compressed data for a moving animation image and the like.

Video encoder unit 112 superimposes VDP image data, natural background image data and moving image data (full color, pallet) transmitted from VDP unit 114, control unit 104 and image data extension unit 108. Video encoder unit 112 performs color pallet reproducing, special effect processing, D/A converting and the like. Output data of video encoder unit 112 are encoded into a YCrCb signal by an external circuit.

ADPCM sound data recorded in CD-ROM 100 are buffered in the K-RAM and then transmitted to sound data output unit 110 by control unit 104. The sound data are reproduced by sound data output unit 110.

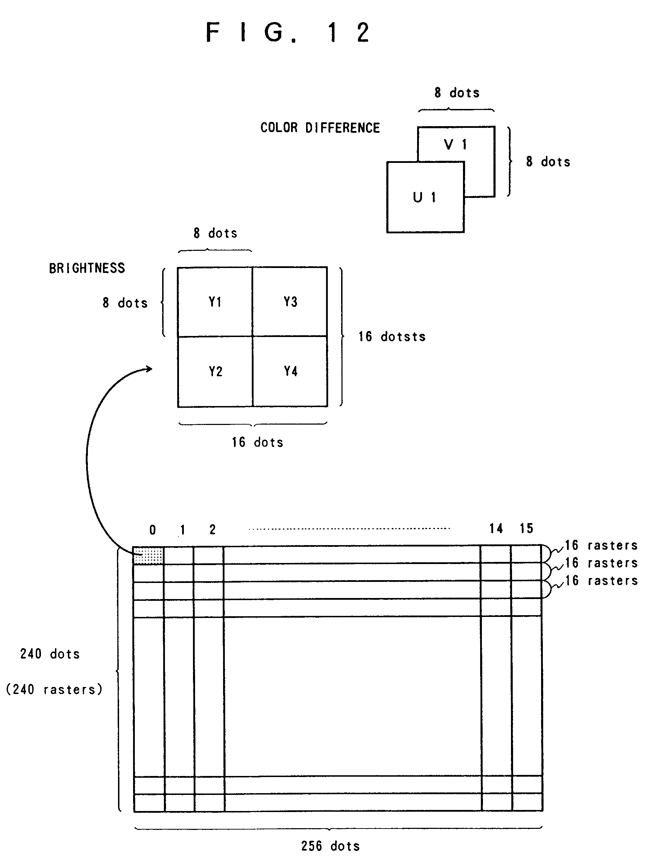

Fig. 12 shows an image data format according to the preferred embodiment. In this embodiment, each block is defined by $16 \times 16$ dots, and the image data are transmitted for 16 rasters.

Fig. 13 shows the configuration of compressed data to be transmitted. In this configuration, "A," B," C" and "D" represent the type of the image data, the first and last halves bytes of the data length of a compressed data region, and a region storing data for forming boundaries for each two bytes in the compressed data, respectively. When image data with pallet information such as an animation image are transmitted to the system, region "A" is set at an F3H, F2H, F1H or F0H, these data being indicated by hexadecimal numbers.

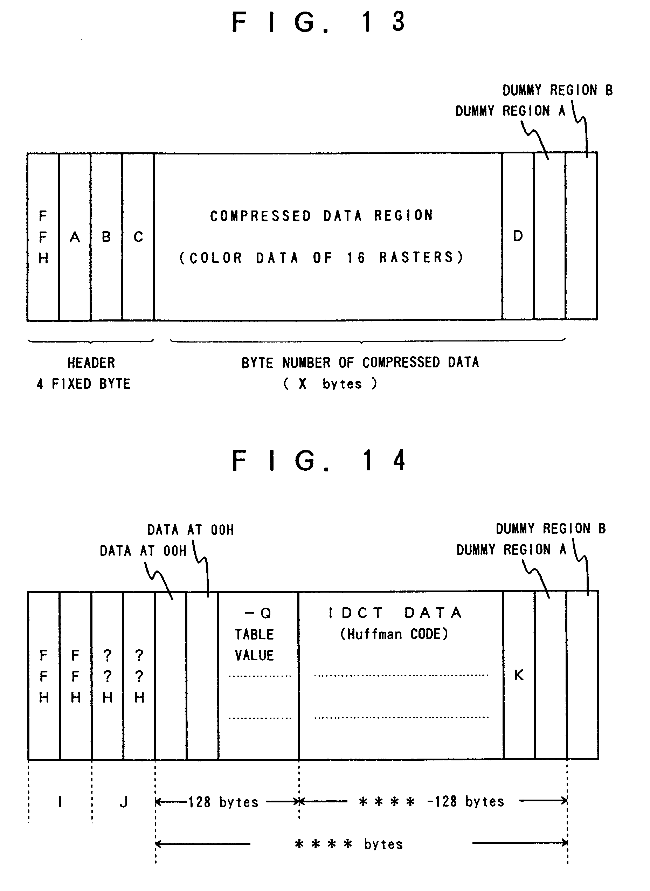

Fig. 14 shows the configuration of compressed data to be transmitted when the Q-table is initialized or the current Q-table is changed. The Q-table is located at the front of the IDCT data.

Fig. 15 shows the configuration of the IDCT data. In this configuration, "QCx" represents the coefficient of an inverse Q-table, and "NRL" represents that the following data is the null block.

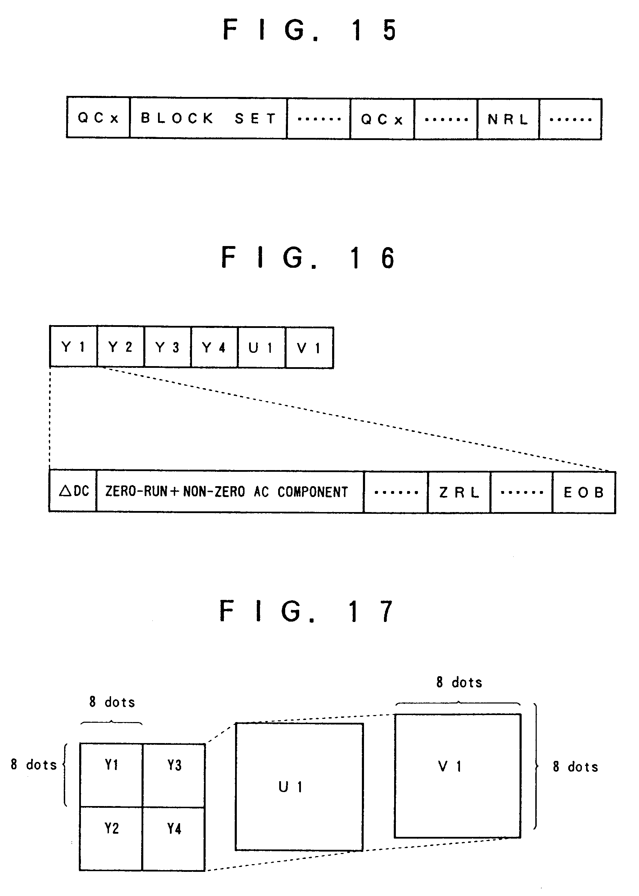

Fig. 16 shows the arrangement of a "BLOCK SET" in the IDCT data. In this arrangement, each of "ZRL" and "EOB" is code data representing that 16 zero data are continued therein and that all data are zero data thereafter, respectively.

Fig. 17 shows the structure of a block forming a part of the image. The block is defined by the brightness Y1, Y2, Y3 and Y4 and the color difference U1 and V1. The block is transmitted with a Q-factor (QCx) at the front thereof. In accordance with the Q-factor and Q-table, the following formulas are given.

$$Qy' (i,j) = QCx * Qy (i,j) / 4 \quad i,j : 0 \text{ to } 7$$
$$Qc' (i,j) = QCx * Qc (i,j) / 4 \quad i,j : 0 \text{ to } 7$$
$$i = j \neq 0$$
$$Qc' (i,j) = Qc (i,j) / 4 \quad i = j = 0$$

Qy' : Q-table for Y for quantizing / inverse-quantizing
Qc' : Q-table for C for quantizing / inverse-quantizing
Qy : down loaded Q-table for Y
Qc : down roaded Q-table for C
QCx : constant Q-factor, QCx = x (ex. QC7 = 7)
"Down load" means to transfer data from an external memory to the RAM.

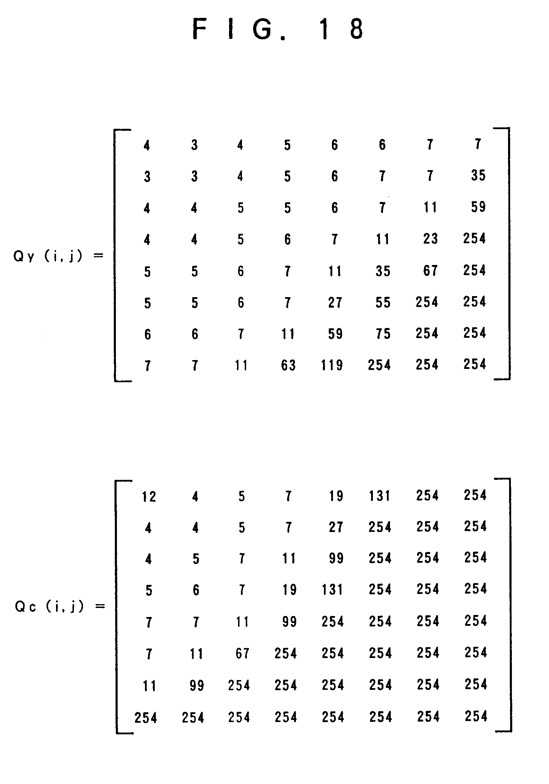

Fig. 18 shows Q-tables to be down loaded.

Referring Fig. 13 again, "A" is set at FFH or F8H when a natural picture is transmitted. When IDCT inverse quantizing table data or compressed image data with IDCT inverse quantizing data are transmitted, "A" is set at FFH. When compressed image data for IDCT are transmitted, "A" is set at F8H.

When 16 image blocks of blue are included in 16 rasters in the picture shown in Fig. 8, the null block process is available. That is, each null block code has a null block length (null block run-length) of 16.

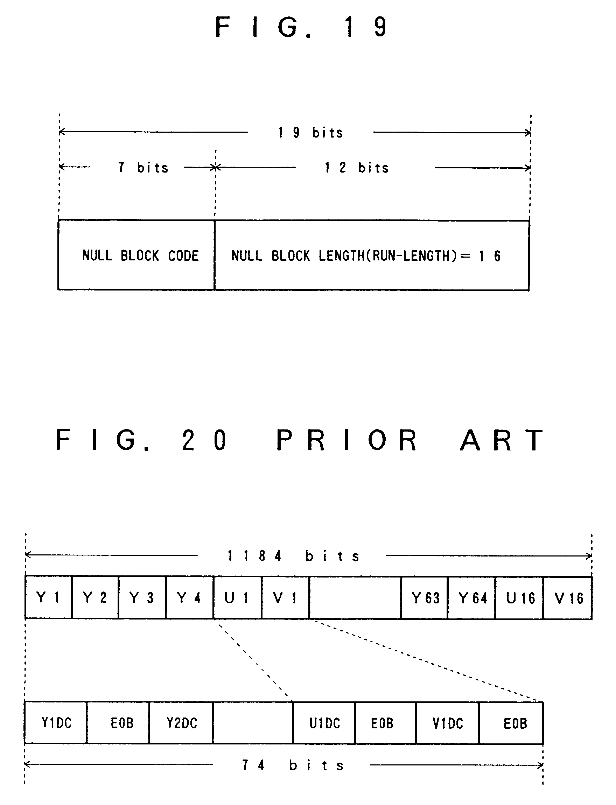

Fig. 19 shows the arrangement of compressed null block data of 19 bits. The null block data are composed of a null block code region of 7 bits and a null block length region of 12 bits. Therefore, "A" is set at F8H in the compressed image data format, and data of "(null block code) + (16)" are set in the null block region, shown in Fig. 19.

On the other hand, if the image data are transmitted in accordance with the conventional method, color data must be transmitted for each dot, as shown in Fig. 20. That is, data of "Y1 + Y2 + Y3 + Y4 + U1 + V1" must be set for each dot. In Fig. 20, "EOB" represents the end of a block.

EP 0 593 159 A2

As described above, according to the invention, the natural image, as shown in Fig. 8, may be transmitted using 19 bits of data only. On the other hand, the conventional system needs 1184 bits of data to transmit it.

## Claims

1. An image processing apparatus, in which image data composed of plural blocks are compressed to be well managed, comprising;

   means for storing a matrix table;

   means for storing a predetermined factor;

   means for quantizing the image data for each block in accordance with the matrix table; and

   means responsive to the factor storing means for changing the matrix table.

2. An image processing apparatus, in which image data composed of plural blocks are compressed to be well managed, comprising;

   means for detecting the color blocks which have the same color and are arranged continuously; and

   means responsive to the detecting means for encoding the image data by using a color code representing the same color and a length code representing the number of the same color blocks.

7

# FIG. 1 PRIOR ART

Y (BRIGHTNESS)

# FIG. 2 PRIOR ART

# F I G.  3   P R I O R   A R T

Y (BRIGHTNESS)

U. V. (COLOR DIFFERENCE)

8 dots

8 dots

| Y1 | Y3 |
|----|----|
| Y2 | Y4 |

8 dots

16 dots

16 dots

U1

V1

8 dots

8 dots

# FIG. 4 PRIOR ART

COMPRESSION

TRANSMISSION

EXTENSION

# F I G. 5

# F I G. 6

○ : SAMPLED
× : NOT SAMPLED

# F I G. 7

COLOR DIFFERENCE

$\kappa$ dots

V 1

U 1

$\iota$ dots

BRIGHTNESS

$\kappa$ dots

$\iota$ dots

| Y1 | Y3 |
|----|----|
| Y2 | Y4 |

$2\iota$ dots

$2\kappa$ dots

$2\kappa$ dots

$2\iota$ dots

BLOCK

SCREEN

# FIG.8

**_FIG._ 9**

EP 0 593 159 A2

# FIG. 10

EP 0 593 159 A2

104 CONTROLL UNIT

SCSI BUS ⇕ 8

CDR-30 ⇕ 1

CPU-BUS ⇕ 16

53C80

CDR30

CPU R/W | REG

SCSI DMA

D (Command/Data)

17 A   16 D   16 D

D (Command/Data)

18   D (Command/Data)

BG Processing Unit

REG

Program

AFFIN

BG ADDRESS (BAT/CG) 16

SCROLL

SUPER IMPOSE

K-T I/F

8

K-T BUS

K-BUS ARBITER#A
(Refresh, RAINBOW, SOUND1, SOUND2 CPU, SCSI, BG)

Selector

D 16

A 17

K-RAM#A I/F

K-BUS ARBITER#A
(Refresh, RAINBOW, SOUND1, SOUND2 CPU, SCSI, BG)

D 16

A 17

REG   Selector

TIMING SEQUENCER

SCK
DCK
-HSYNC
-VSYNC

CLOCK

K-RAM#B I/F

Refresh | SOUND1 | SOUND2 | RAINBOW

K-R I/F

A 8   D 16

A 8   D 16

K-RAM#B

K-RAM#A

K-R BUS

# FIG. 1 1

_106_ IMAGE DATA
EXTENSION UNIT

# F I G . 1 2

COLOR DIFFERENCE

8 dots

V 1

8 dots

U 1

BRIGHTNESS

8 dots

8 dots

| Y1 | Y3 |
|----|----|
| Y2 | Y4 |

16 dotsts

16 dots

0    1    2    ..................................................    14   15

16 rasters
16 rasters
16 rasters

240 dots

(240 rasters)

256 dots

# F I G. 1 3

DUMMY REGION B
DUMMY REGION A

| F F H | A | B | C | COMPRESSED DATA REGION<br><br>(COLOR DATA OF 16 RASTERS) | D | | |

HEADER
4 FIXED BYTE

BYTE NUMBER OF COMPRESSED DATA
( X bytes )

# F I G. 1 4

DATA AT 00H
DATA AT 00H

DUMMY REGION B
DUMMY REGION A

| F F H | F F H | ? ? H | ? ? H | | | − Q<br>TABLE<br>VALUE | I D C T   D A T A<br>(Huffman CODE) | K | | |

I    J    ←—128 bytes —→    * * * * −128 bytes —→

* * * * bytes

# F I G. 1 5

| QCx | BLOCK SET | ...... | QCx | ...... | NRL | ...... |
|-----|-----------|--------|-----|--------|-----|--------|

# F I G. 1 6

| Y 1 | Y 2 | Y 3 | Y 4 | U 1 | V 1 |
|-----|-----|-----|-----|-----|-----|

| △DC | ZERO-RUN + NON-ZERO AC COMPONENT | ...... | Z R L | ...... | E O B |
|-----|----------------------------------|--------|-------|--------|-------|

# F I G. 1 7

# F I G. 1 8

$$Qy(i,j) = \begin{bmatrix} 4 & 3 & 4 & 5 & 6 & 6 & 7 & 7 \\ 3 & 3 & 4 & 5 & 6 & 7 & 7 & 35 \\ 4 & 4 & 5 & 5 & 6 & 7 & 11 & 59 \\ 4 & 4 & 5 & 6 & 7 & 11 & 23 & 254 \\ 5 & 5 & 6 & 7 & 11 & 35 & 67 & 254 \\ 5 & 5 & 6 & 7 & 27 & 55 & 254 & 254 \\ 6 & 6 & 7 & 11 & 59 & 75 & 254 & 254 \\ 7 & 7 & 11 & 63 & 119 & 254 & 254 & 254 \end{bmatrix}$$

$$Qc(i,j) = \begin{bmatrix} 12 & 4 & 5 & 7 & 19 & 131 & 254 & 254 \\ 4 & 4 & 5 & 7 & 27 & 254 & 254 & 254 \\ 4 & 5 & 7 & 11 & 99 & 254 & 254 & 254 \\ 5 & 6 & 7 & 19 & 131 & 254 & 254 & 254 \\ 7 & 7 & 11 & 99 & 254 & 254 & 254 & 254 \\ 7 & 11 & 67 & 254 & 254 & 254 & 254 & 254 \\ 11 & 99 & 254 & 254 & 254 & 254 & 254 & 254 \\ 254 & 254 & 254 & 254 & 254 & 254 & 254 & 254 \end{bmatrix}$$

# F I G. 1 9

|← 19 bits →|

|← 7 bits →|← 1 2 bits →|

| NULL BLOCK CODE | NULL BLOCK LENGTH(RUN-LENGTH)= 1 6 |

# F I G. 2 0   P R I O R   A R T

|← 1 1 8 4  b i t s →|

| Y 1 | Y 2 | Y 3 | Y 4 | U 1 | V 1 | | Y 63 | Y 64 | U 16 | V 16 |

| Y1DC | EOB | Y2DC | | U1DC | EOB | V1DC | EOB |

|← 7 4  b i t s →|